# EUROPEAN PATENT SPECIFICATION

(11) **EP 1 368 908 B1**
(45) Date of publication and mention of the grant of the patent: **22.10.2008**
(21) Application number: 02714114.2
(22) Date of filing: 23.01.2002
(51) Int. Cl.: H04B 7/005

(54) **LINK POWER CONVERGENCE SYSTEM**
VORRICHTUNG ZUR KONVERGENZ DER VERBINDUNGSLEISTUNGEN
SYSTEME DE CONVERGENCE DE PUISSANCE POUR LIAISONS

(30) Priority: 16.03.2001 GB 0106546
(43) Date of publication of application: 10.12.2003
(73) Proprietor: Nokia Siemens Networks GmbH & Co. KG, 81541 München (DE)
(72) Inventor: CHAMBERS, Peter, Hants BH24 3RF (GB); RAAF, Bernhard, 81475 Munich (DE)
(74) Representative: Style, Kelda Camilla Karen
(86) International application number: PCT/EP2002/000775
(87) International publication number: WO 2002/075954

(56) References cited:
- WO-A-00/42716
- WO-A-00/65744
- GB-A- 2 341 294

## Description

This invention relates to power convergence systems for radio links such as, for example, such links carrying 3GPP cellular transmissions.

A difficulty encountered with such links involves the speed at which the appropriate power control level for given up-link and/or down-link transmissions can be established. The rapid establishment of correct power levels is important, since an estimated power level, at which it is necessary to commence transmissions, is unlikely to be correct.

Operation with inappropriate power levels results in data loss and/or data errors if the levels are too low and causes interference, leading to loss of data capacity for the cell in question and neighbouring cells, if the levels are too high.

Initial power level estimates can be corrected by known procedures that are effective, given time, during a transmission to cause the transmitted power levels to approach, i.e. converge upon, an appropriate level. Existing procedures, however, are based upon the use of open loop path loss or power level estimates which permit the evaluation of an approximate transmission power level which is sufficiently close to the desired power level to permit the use of normal power control algorithms to cause the transmission power level to converge upon the desired power level for optimal operation of the link. This results in a temporary variance in up-link power levels, following which a power control "preamble" can be incorporated into the transmissions at times when no traffic is passed over the link, and power convergence proceeds as normal.

The existing procedures require significant time to be effective and thus the power levels can exhibit significant error variance over relatively long periods, and it is thus an object of this invention to provide a system which accelerates the power control convergence procedure.

WO 0042716 describes power control of control and data channels in a radio communication system, where the power control is in steps of varying sizes, reducing as a target value is approached.

GB 2341294 aims to provide a system with frame division which does not lose performance and terminal transmit power is set based on the content of at least 3 TPC bits.

WO 0065744 describes controlling power transmission in a radio system by evaluating received signals, producing power control information therefrom and coding it with redundancy and data before transmitting it to the transmitter.

According to the invention from one aspect, there is provided a power convergence system for a radio the link employing a time slot format including provision for traffic control data, wherein control information relevant to the convergence process is transmitted; characterised in that the control information relevant to the convergence process is transmitted in slots normally used for traffic control data transmissions and which are re-allocated to transmit power convergence information, until convergence is established.

Thus it will be appreciated that the invention provides acceleration of convergence at the expense of delaying the onset of fully controlled traffic flow. The inventors have appreciated that the unusual expedient of delaying at least some of the traffic that the link has been established to transmit is preferable to operation of the link over a protracted period at inappropriate power levels. In this respect, it needs to be borne in mind that, as mentioned previously, operation of the link with inappropriate power levels causes significant operational problems, including loss of data and loss of data capacity.

Preferably, the said control information comprises pilot and power control bits, and still more preferably the power control bits are encoded and relate to step functions of gain. In this latter event, it is preferred that relatively few steps of relatively large amplitude are employed, subject to the need for adequate accuracy in the final convergence, rather than employing relatively more steps of smaller amplitude. If desired, the amplitude of convergence steps used can be reduced as convergence proceeds; such convergence being either progressive or discrete, depending upon system requirements.

In some preferred embodiments of the invention, whole time slots normally used for traffic control data transmissions are re-allocated to power convergence information. In other preferred embodiments of the invention, some traffic control data are transmitted in time slots that are partially re-allocated to the transmission of convergence control information.

In any event, power level convergence is accelerated at the expense of traffic control data transmissions, resulting in the rapid establishment of operating power levels consistent with the reliable transmission and reception of traffic data over a link and minimal interference with other links in the cell in question or in adjacent cells.

In some embodiments of the invention, no traffic data is carried over a link until convergence of the power level for the link has been established whereas, in other embodiments, some traffic data is carried (whilst convergence takes place) and the traffic control data are incorporated into time slots shared with convergence-related data.

In order that the invention may be clearly understood and readily carried into effect, one embodiment thereof will now be described, by way of example only, with reference to the accompanying drawings, of which:
Figure 1 shows a typical 3GPP up-link time slot format as conventionally used;
Figure 2 shows the format of Figure 1, modified in accordance with an example of the system of the present invention; and
Figure 3 illustrates schematically an example of channel initialisation applied in an example of a system according to the invention.

As will be appreciated from the foregoing, a system in accordance with the invention requires that, during a short period following logical establishment of a radio link, the conventional transmission format is changed in order to devote all (or at least a greater proportion than usual) of the transmission resource used to control information, such as pilot and power control bits. By this means, and with the optional enhancement of the use of coding methods to minimise power control word error probabilities, the variance of power level error is minimised, either before the transmission of any traffic data or at least before the transmission of a significant amount of such data.

As mentioned previously, the system preferably controls the power level convergence in steps, and it is preferred that the amplitude of those steps be modified, as compared to those conventionally used for power control, in order to further accelerate convergence. In one embodiment, a sequence of fewer but larger steps has been found effective, provided of course that the probability of eventual power level error is sufficiently small. In this respect, the power level error must be estimated with sufficient accuracy and the estimate of step amplitude must be conveyed with low error. A relatively large power step can be conveyed more reliably using a coded word than by uncoded step up- or down- bits. Further, if coding is used, time diversity can be employed by appropriately spacing the coded bits.

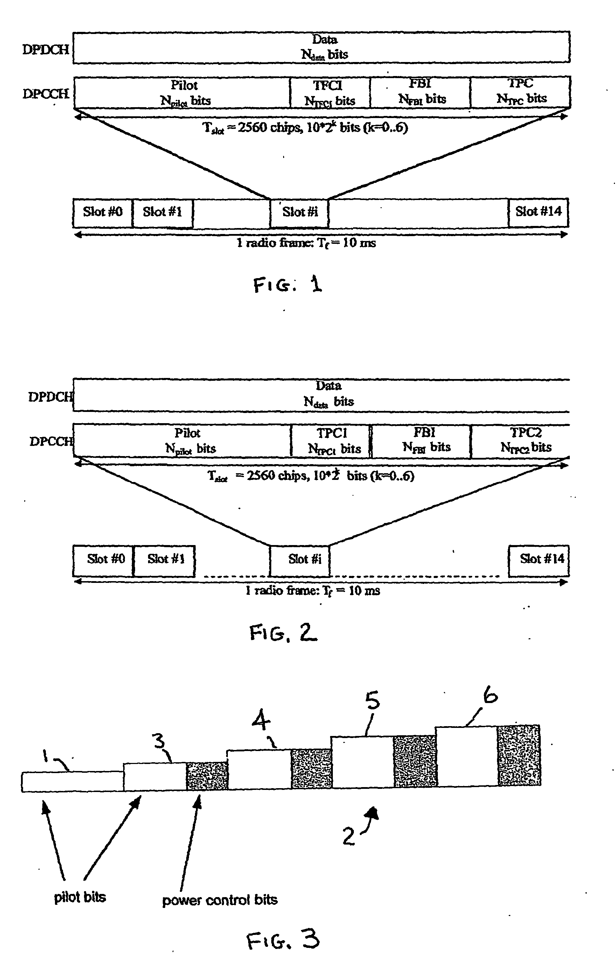

Referring now to Figures 1 and 2, there is shown respectively, for comparison purposes a typical 3GPP up-link time slot format as conventionally used, and a modification thereof intended for use in a system in accordance with an example of the present invention.

Attention is directed to the content of the cells delineated in the line marked DPCCH, indicating schematically the transmissions at various times in a control channel, from which it will be observed that, whereas in Figure 1 it is conventional to transmit traffic control data during the second cell period, the system of this example of the invention reallocates that cell period to the transmission of power control data. Thus, in this example, traffic control data bits are exchanged for power control data bits.

In this connection, it is often the case that traffic control transmissions are not essential for the early slots of a transmission. If nevertheless a slot format including provision for traffic control data is employed, the relevant time fields can readily be re-allocated to power control data. Later, once the traffic data flows, additional slots are allocated to traffic control and used for that purpose. In the event that some traffic data flows during the early time slots of a transmission, such data are likely to be of restricted form, for example for signalling purposes, and thus a full traffic control function may not be needed. If necessary, in such circumstances, an intermediate trade-off can be used, wherein certain time slots (cells) are configured to contain both traffic control and power control bits.

Referring now the Figure 3, there is shown schematically an example of channel initialisation applied in an example of a system according to the invention. It contemplates the establishment of a radio link in which an initial estimate of required power is too low. The same principles (mutatis mutandis) apply where the initial estimate is too high, and moreover hold good for transmission in either direction over the link.

As shown in Figure 3, the data transmitted in the first "slot" 1 of a sequence generally shown as 2 consist entirely of pilot bits. This is because no SIR measurement has yet been made and so no corrective signalling can usefully take place. At this time, therefore, it is best to devote all available energy to SIR estimation.

Following the first slot 1, the later slots such as 3, 4, 5 and 6 are shown to contain a mixture of pilot bits, for channel assessment, and power control bits used in the convergence process. After each run of pilot bits, a measurement of received SIR is effected. The local estimate of SIR (including any averaging) having been completed, the power control bits are received. It is a matter of design choice as to how the power control bits are used in the system to up-date the local transmitter power.

If the power control bits are used to form an "up/down" decision at that time, then conventional power control proceeds. However, if there is sufficient resolving power in a given number of bits (e.g. when despread) then a coding scheme may be used to provide coding gain as well as processing gain available from repetition and dispreading.

Reed-Muller codes are used in the 3GPP format for traffic control signalling, and these are also suitable in the context of power control signalling to signal steps whose amplitude can take one of several values. In one example, a (16, 5) first-order Reed-Muller (or bi-orthogonal) code leads to a 5-bit value (i.e. one of 32 distinct levels) being signalled by 16 soft bits. If there are 4 soft bits available in each slot for such signalling, then clearly this step amplitude value would take four slots to convey. Following the transmission of that information, the remote end of the radio ling is able to adjust its transmitted power to a corrected level in a single step. The operation of the control loop then proceeds as desired.

## Claims

1. A power convergence system for a radio link, the link employing a time slot format including provision for traffic control data (TFCI), wherein control information relevant to the convergence process is transmitted; **characterised in that** the control information relevant to the convergence process is transmitted in slots normally used for traffic control data transmissions (TPCI) and which are re-allocated to transmit power convergence information, until convergence is established.

2. A system according to claim 1 wherein said control information comprises pilot and power control bits.

3. A system according to claim 2 wherein the power control bits are encoded and relate to step functions of gain.

4. A system according to claim 3 wherein relatively few steps of relatively large amplitude are employed, subject to the need for adequate accuracy in the final convergence.

5. A system according to claim 3 or claim 4 wherein the amplitude of convergence steps used is reduced as convergence proceeds.

6. A system according to claim 5 wherein the amplitude reduction of said steps is progressive.

7. A system according to claim 5 wherein the amplitude reduction of said steps is discrete.

8. A system according to any preceding claim wherein whole time slots normally used for traffic control data transmissions are re-allocated to power convergence information.

9. A system according to any of claims 1 to 7 wherein some traffic control data are transmitted in time slots that are partially re-allocated to the transmission of convergence control information.

10. A system according to any preceding claim wherein no traffic data is carried over a link until convergence of the power level for the link has been established.

11. A system according to any of claims 1 to 9 wherein some traffic data is carried whilst convergence takes place and the traffic control data are incorporated into time slots shared with convergence-related data.

## Patentansprüche

1. Leistungskonvergenzsystem für eine Funkverbindung, wobei die Verbindung ein Zeitfensterformat einsetzt, dass eine Vorbereitung für Verkehrssteuerdaten (TFCI) einschließt, wobei Steuerinformationen übertragen werden, die für den Konvergenzvorgang relevant sind;
**dadurch gekennzeichnet, dass**
die Steuerinformationen, die für den Konvergenzvorgang relevant sind, in Fenstern übertragen werden, die normalerweise für Verkehrssteuerdaten-Übertragungen (TPCI) verwendet werden, und die neu zugewiesen werden, um Leistungskonvergenzinformationen zu übertragen, bis Konvergenz erreicht ist.

2. System nach Anspruch 1, wobei die Steuerinformationen Pilot- und Leistungssteuerbits umfassen.

3. System nach Anspruch 2, wobei die Leistungssteuerbits kodiert sind und sich auf Schrittfunktionen der Verstärkung beziehen.

4. System nach Anspruch 3, wobei vergleichsweise wenige Schritte von vergleichsweise großer Amplitude eingesetzt werden, in Abhängigkeit von einer Notwendigkeit adäquater Genauigkeit bei der endgültigen Konvergenz.

5. System nach Anspruch 3 oder 4, wobei die Amplitude der verwendeten Konvergenzschritte mit fortschreitender Konvergenz verringert wird.

6. System nach Anspruch 5, wobei die Amplitudenverringerung der Schritte progressiv ist.

7. System nach Anspruch 5, wobei die Amplitudenverringerung der Schritte diskret ist.

8. System nach irgendeinem vorhergehenden Anspruch, wobei ganze Zeitfenster, die normalerweise für Verkehrssteuerdaten-Übertragungen verwendet werden, neu an Leistungskonvergenzinformationen zugewiesen werden.

9. System nach irgendeinem der Ansprüche 1 bis 7, wobei einige Verkehrssteuerdaten in Zeitfenstern übertragen werden, die teilweise für die Übertragung von Konvergenzsteuerinformationen neu zugewiesen werden.

10. System nach irgendeinem vorhergehenden Anspruch, wobei keine Verkehrsdaten über eine Verbindung transportiert werden, bis die Konvergenz des Leistungsniveaus für die Verbindung erreicht wurde.

11. System nach irgendeinem der Ansprüche 1 bis 9, wobei einige Verkehrsdaten transportiert werden, während Konvergenz hergestellt wird, und die Verkehrssteuerdaten in Zeitfenstern eingeschlossen werden, die mit Konvergenzbezogenen Daten gemeinsam genutzt werden.

## Revendications

1. Système de convergence de puissance pour une liaison radio, la liaison utilisant un format de tranche de temps comprenant la fourniture de données de contrôle de trafic (TFCI), dans lequel des informations de contrôle utiles pour le processus de convergence sont transmises ; **caractérisé en ce que** les informations de contrôle utiles pour le processus de convergence sont transmises dans des tranches normalement utilisées pour les transmissions de données de contrôle de trafic (TPCI) et qui sont réattribuées pour transmettre des informations de convergence de puissance, jusqu'à ce qu'une convergence soit établie.

2. Système selon la revendication 1, dans lequel lesdites informations de contrôle comprennent des bits pilotes et de contrôle de puissance.

3. Système selon la revendication 2, dans lequel les bits de contrôle de puissance sont encodés et concernent des fonctions de pas de gain.

4. Système selon la revendication 3, dans lequel relativement peu de pas de relativement grande amplitude sont utilisés, en fonction du besoin d'une précision adéquate dans la convergence finale.

5. Système selon la revendication 3 ou la revendication 4, dans lequel l'amplitude des pas de convergence utilisés est réduite alors que la convergence progresse.

6. Système selon la revendication 5, dans lequel la réduction de l'amplitude desdits pas est progressive.

7. Système selon la revendication 5, dans lequel la réduction de l'amplitude desdits pas est discrète.

8. Système selon l'une quelconque des revendications précédentes, dans lequel toutes les tranches de temps normalement utilisées pour des transmissions de données de contrôle de trafic sont réattribuées à des informations de convergence de puissance.

9. Système selon l'une quelconque des revendications 1 à 7, dans lequel certaines données de contrôle de trafic sont transmises dans des tranches de temps qui sont partiellement réattribuées à la transmission d'informations de contrôle de convergence.

10. Système selon l'une quelconque des revendications précédentes, dans lequel aucune donnée de trafic n'est transportée sur une liaison jusqu'à ce qu'une convergence du niveau de puissance pour la liaison ait été établie.

11. Système selon l'une quelconque des revendications 1 à 9, dans lequel certaines des données de trafic sont transportées tandis que la convergence a lieu et les données de contrôle de trafic sont incorporées dans des tranches de temps partagées avec des données concernant la convergence.
